**Europäisches Patentamt**

**European Patent Office**

**Office européen des brevets**

(19)

(11) Veröffentlichungsnummer: **0 130 635**
**B1**

(12) ## EUROPÄISCHE PATENTSCHRIFT

(45) Veröffentlichungstag der Patentschrift:
**11.05.88**

(51) Int. Cl.⁴: **G 01 F 23/22**

(21) Anmeldenummer: **84200810.4**

(22) Anmeldetag: **08.06.84**

(54) Verfahren zur Messung und Regelung des Füllstandes von in einem Behälter befindlichen Stoffen.

(30) Priorität: **01.07.83 DE 3323748**

(43) Veröffentlichungstag der Anmeldung:
**09.01.85 Patentblatt 85/2**

(45) Bekanntmachung des Hinweises auf die Patenterteilung:
**11.05.88 Patentblatt 88/19**

(84) Benannte Vertragsstaaten:
**BE DE FR GB SE**

(56) Entgegenhaltungen:
**EP - A - 0 067 668**
**DE - B - 1 156 576**
**DE - B - 1 208 515**
**DE - B - 1 248 969**
**FR - A - 2 374 985**
**FR - A - 2 439 983**
**GB - A - 2 082 777**

**Die Akte enthält technische Angaben, die nach dem Eingang der Anmeldung eingereicht wurden und die nicht in dieser Patentschrift enthalten sind.**

(73) Patentinhaber: **NORDDEUTSCHE AFFINERIE AG, Alsterterrasse 2, D-2000 Hamburg 36 (DE)**

(72) Erfinder: **Schliefer, Heinrich, Am Musterplatz 27, D-2105 Seevetal 3-Maschen (DE)**
Erfinder: **Naaf, Rüdiger, Hermannstrasse 9, D-2091 Marxen (DE)**
Erfinder: **Christ, Rolf, D-2862 Worpswede (DE)**

(74) Vertreter: **Rieger, Harald, Dr., Reuterweg 14, D-6000 Frankfurt am Main (DE)**

## Beschreibung

Die Erfindung betrifft ein Verfahren zur Messung und Regelung des Füllstandes von in einem Behälter befindlichen Schüttungen und flüssigen Stoffen durch Erfassen der Niveauänderung des Füllstandes mittels einer elektrischen Abstandsmesseinrichtung.

Zur Überwachung des Füllstandes unterschiedlichster Stoffe in offenen oder geschlossenen Behältern sind indirekte Abstandsmessverfahren bekannt, z.B. radiometrische, optische, akkustische und elektrische Verfahren.

Es sind auch Vorrichtungen zur Anzeige der Füllhöhe in Bunkern oder ähnlichen Behältern bekannt, bei denen z.B. mittels einer Membran eine mechanische Anzeige des Füllungsgrades bewirkt wird. Solche Anzeiger arbeiten im allgemeinen ausreichend, wenn das in dem Bunker vorhandene Material aus gleichmässig geformten kleinen Teilen besteht, die trocken sind und leicht fliessen.

Die EP-A3-67 668 betrifft eine Vorrichtung für ein induktives Messverfahren bei Niveauänderungen eines Metallbadspiegels. Bei diesem Verfahren wird ein induktiver Messkopf (Messspule) der Höhenänderung eines Metallbadspiegels nachgeführt. Hierbei wird nicht die Impedanz zwischen Messelektrode und Badspiegel gemessen, sondern es wird die Impedanzänderung in der Messspule verfolgt. Hierzu heisst es in EP-A3-67 668 (auf Seite 5, Zeilen 20 bis 25) dass, wenn sich der Abstand zwischen Spule und dem Schmelzenspiegel ändert, eine Änderung in der Impedanz in der Spule eintritt. Dabei löst die Spule ein elektrisches Signal aus, welches der Änderung des Abstandes entspricht. Das heisst im Ergebnis, dass über eine Brückenschaltung eine Abgleichung vorgenommen wird, wobei der Abgleichungswert ein Mass für die Lage bzw. Höhe des Badspiegels ist.

Eine ähnliche Vorrichtung, bei der jedoch die Impedanz zwischen Messelektrode und Badspiegel als Messgrösse verwendet wird, ist aus GB-A-2 082 777 bekannt.

Der Erfindung liegt die Aufgabe zugrunde, ein Verfahren zur Messung und Regelung des Füllstandes von in einem Behälter befindlichen Gut anzugeben, das insbesondere für Schüttungen oder Flüssigkeiten in offenen oder geschlossenen Behältern oder Bunkern anwendbar ist.

Die Erfindung löst die Aufgabe mit einem Verfahren zur Messung und Regelung des Füllstandes von in einem Behälter befindlichen Stoffen durch berührungsfreies Erfassen der Niveauänderung des Füllstandes mittels einer mit einer Sonde versehenen elektrischen Abstandsmesseinrichtung für die Messung der elektrischen Impedanz sowie mittels Überwachungs- und Steuerungseinrichtungen zur Aufnahme eines Entfernungssignals, das von der Abstandsmesseinrichtung infolge einer Niveauänderung des Füllstandes erzeugt und für die Niveausteuerung des in dem Behälter befindlichen Stoffes auf ein gewünschtes Niveau verwendet wird, und ist dadurch gekennzeichnet, dass die Niveauänderung von Schüttungen nichtmetallischer Stoffe oder von Flüssigkeiten – ausgenommen Metallschmelzen – mittels einer beweglichen Sonde durch periodisches Messen des Verlaufs der elektrischen Impedanz zwischen Stoffoberfläche und Sonde erfasst wird, wobei die Sonde in einem Messzyklus im wesentlichen vertikal zur und in Richtung auf die Stoffoberfläche bewegt wird, bei Erreichen eines gewählten sehr kleinen, jedoch von Null verschiedenen Impedanzwertes ihre Bewegungsrichtung umkehrt, bis zum Erreichen eines sehr hohen Impedanzwertes bewegt wird und dort ihre Bewegungsrichtung wieder umkehrt.

Die zu messenden Stoffe besitzen unter technischen Bedingungen praktisch immer eine gewisse Leitfähigkeit, auch wenn es sich um pulverige oder körnige nichtmetallische Stoffe handelt, so dass die Impedanz von oberhalb des Niveaus des Füllgutes gemessen werden kann. Das Füllgut befindet sich im allgemeinen in einem Behälter aus Metall, so dass die metallische Behälterwand als Bezugselektrode dient. Es wurde gefunden, dass die Änderung der elektrischen Impedanz beim Übergang von dem Medium oberhalb der Stoffoberfläche zur Stoffoberfläche nicht abrupt erfolgt, sondern dass die Änderung des Impedanz zwar nicht linear aber quasi stetig verläuft. Dies beruht auf dem Vorhandensein einer Grenzschicht zwischen Stoffoberfläche und darüberliegendem Medium.

Das Schüttgut ist zweckmässig kleinstückig bis pulverig und kann die Form von Granulat oder Pellets haben. Vorzugsweise ist die Schüttung feinkörnig bis pulvrig. Das erfindungsgemässe Verfahren eignet sich ferner zur Füllstandsmessung von wässrigen Flüssigkeiten oder Dispersionen auf Basis wässriger Systeme, wie auch zur Messung des Füllstandes von organischen Flüssigkeiten, wie Alkoholen, z.B. Methanol, Ethanol, Aceton, Toluol oder Mineralöl.

Das über der Stoffoberfläche bzw. über dem Niveau des Schüttgutes oder der Flüssigkeit im Behälter liegende und die Grenzschicht abschliessende Medium ist in aller Regel eine Gasatmosphäre, wie Luft oder Schutzgas.

Andere Aspekte des beschriebenen Verfahrens werden in der Anmeldung 84 200 831.0 (EP-A-131 979) mit gleichem Prioritätstag beansprucht.

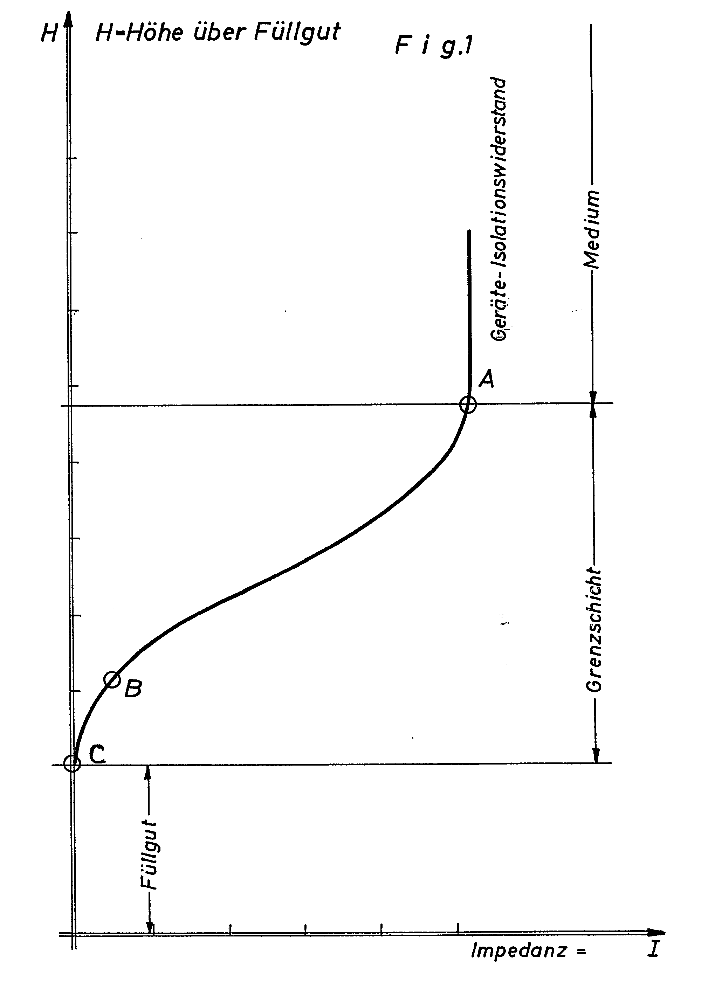

In Figur 1 ist der Verlauf der elektrischen Impedanz innerhalb der Grenzschicht zwischen Stoffoberfläche und darüberliegendem Medium schematisch dargestellt.

Zur praktischen Durchführung des erfindungsgemässen Verfahrens wird eine Sonde aus einem Material guter elektrischer Leitfähigkeit und gegebenenfalls guter Wärmebeständigkeit verwendet, beispielsweise ein Material wie Chromstahl, Chrom-Nickel-Legierungen, Graphit, elektrisch leitfähiges Glas oder elektrisch leitfähiger Kunststoff. Die Sonde wird, ausgehend von dem Bereich sehr hoher Impedanz oberhalb des Mediums, auf die Stoffoberflächje im wesentlichen lotrecht zubewegt. Während dieser Bewegung wird ständig die Impedanz zwischen der Stoffoberfläche der Schüttung oder Flüssigkeit (Erdpotential) und der Sonde gemessen. Dabei wird gleichzeitig der Weg der Sonde in bekannter Weise, z.B. potentiometrisch, als elektrischer Wert abgebildet.

Erreicht während der Sondenbewegung die Impedanz einen sehr kleinen, jedoch von Null noch verschiedenen Wert, das heisst, die gewünschte Füllhöhe des Behälters, so wird die Sondenbewegung durch elektrische und/oder elektronische Steuerung umgekehrt, und die räumliche Lage des Umkehrpunktes wird durch die Wegmesseinrichtung der Sonde erfasst und gespeichert. Der beschriebene Vorgang wird erneut eingeleitet, wenn die Sonde den Bereich hoher Impedanz ausserhalb der Grenzschicht wieder erreicht hat. Die erneute Messung kann aber auch über eine Zeitsteuerung erfolgen. In jedem Fall resultiert eine periodisch taktende Messung. Periodendauer, Fahrgeschwindigkeit der Sonde und Tasthub lassen sich mit an sich bekannten elektrischen Schaltmitteln in weiten Grenzen variieren und an die Mess- bzw. Regelaufgabe anpassen.

Ein besonderer Vorteil des erfindungsgemässen Verfahrens besteht darin, dass mit der Messsonde, die im einfachsten Fall aus einem wenige Millimeter starken Draht bestehen kann, die Niveauänderung eines Füllgutes auch in Behältern mit sehr kleinem, z.B. weniger als 50 mm betragenden, Innendurchmesser erfasst und gesteuert werden kann. Ein weiterer, wesentlicher Vorteil des erfindungsgemässen Verfahrens liegt darin, dass Messhöhen mit Werten von wenigen Millimetern bis zu mehreren Metern umfasst werden können.

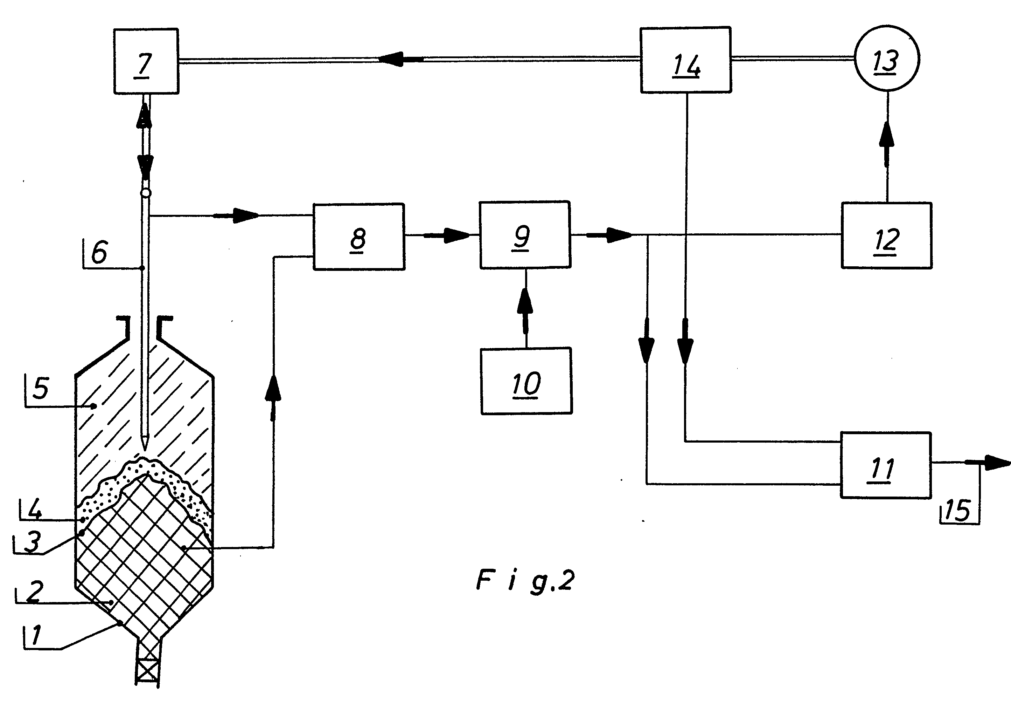

In der Abbildung der Figur 2 ist ein beispielhaftes Blockschaltbild zur Durchführung des erfindungsgemässen Verfahrens dargestellt. Im Behälter (1) der Figur 2 befindet sich das Schüttgut (2) mit darüberliegendem Medium (5). Oberhalb der Schüttgutoberfläche (3) hat sich eine Grenzschicht (4) ausgebildet. Die Sonde (6) wird mittels des Verschiebemechanismus (7) zum Schüttgut (2) hin oder von diesem weg bewegt. Es bezeichnen ferner

8 die Impedanzmessschaltung,
9 den Komparator,
10 den Impedanzgrenzwert- bzw. Sollwerteinsteller,
11 die Tor- und Speicherschaltung,
12 die Motorsteuerung,
13 einen Servomotor,
14 die Wegmesseinrichtung.

Mit 15 ist das ausgehende Messsignal bezeichnet, das zur Regelung der Füllhöhe durch Schüttgutzufuhr (in der Zeichnung nicht dargestellt) dient. Das Schalt- und Regelsystem wirkt gemäss dem erfindungsgemässen Verfahren in der folgenden Weise:

Bei der in Figur 2 gezeigten Ausgangssituation befindet sich die Sonde (6) ausserhalb der Grenzschicht, also oberhalb vom Punkt (A) der Figur 1.

Es sei angenommen, dass am Sollwerteinsteller (10) ein Impedanzwert vorgegeben ist, der dem Punkt (B) in Figur 1 entspricht. Der Komparator (9) wird dann eine Differenz zwischen dem von der Impedanzmessschaltung (8) gelieferten Wert (entspr. B) feststellen und über die Motorsteuerung (12) den Servomotor (13) ansteuern, so dass er über den Verschiebemechanismus (7) die Sonde (6) zum Füllgut hin bewegt.

Wenn die Sonde die Grenzschicht erreicht, wird diese also von (A) in Richtung (B) durchfahren. Erreicht die von (8) gemessene Impedanz den Sollwert (B), so steuert der Komparator (9) über (12), (13) und (7) die Sondenbewegung um, so dass sich die Sonde von (B) aus in Richtung (A) Figur 1 bewegt. Im Augenblick der Umsteuerung wird die von der Wegmesseinrichtung (14) gemessene Position der Sonde (6) als elektrischer Wert von der Tor- und Speicherschaltung (11) übernommen. Somit ist der hier gespeicherte Wert und mithin das aus ihm gebildete Messsignal (15) proportional der räumlichen Lage des Punktes (B). Das Messsignal (15) steuert eine geeignete Zugabevorrichtung (in der Figur nicht dargestellt).

Liegt der Punkt (B) sehr nahe beim Übergang von der Grenzschicht zur Schmelze, so ist das Messsignal auch mit genügender Annäherung proportional der räumlichen Lage der Stoffoberfläche im Behälter (entspricht dem Punkt C in Fig. 1).

Durch entsprechende Auslegung der Motorsteuerung (12) wird sichergestellt, dass die Umsteuerung bei Erreichen des Impedanzsollwertes (Punkt B) sehr rasch erfolgt, und ausserdem, dass nach dem Umsteuern die Sonde erst einen gewissen Weg in Richtung höherer Impedanzwerte zurücklegt, bevor der nächste Messvorgang freigegeben wird, der dann wieder in der beschriebenen Weise abläuft, so dass sich eine periodische Messung mit in weiten Grenzen einstellbarer Taktfolge ergibt.

**Patentansprüche**

1. Verfahren zur Messung und Regelung des Füllstandes von in einem Behälter befindlichen Stoffen durch berührungsfreies Erfassen der Niveauänderung des Füllstandes (C) mittels einer mit einer Sonde versehenen elektrischen Abstandsmesseinrichtung für die Messung der elektrischen Impedanz sowie mittels Überwachungs- und Steuerungseinrichtungen zur Aufnahme eines Entfernungssignals, das von der Abstandsmesseinrichtung infolge einer Niveauänderung des Füllstandes erzeugt und für die Niveausteuerung des in dem Behälter befindlichen Stoffes auf ein gewünschtes Niveau verwendet wird, dadurch gekennzeichnet, dass die Niveauänderung von Schüttungen nichtmetallischer Stoffe oder von Flüssigkeiten – ausgenommen Metallschmelzen – mittels einer beweglichen Sonde durch periodisches Messen des Verlaufs der elektrischen Impedanz zwischen Stoffoberfläche (C) und Sonde erfasst wird, wobei die Sonde in einem Messzyklus im wesentlichen vertikal zur und in Richtung auf die Stoffoberfläche (C) bewegt wird, bei Erreichen eines gewählten sehr kleinen, jedoch von Null verschiedenen Impedanzwertes (B) ihre Bewegungsrichtung umkehrt, bis zum Erreichen eines sehr hohen Impedanzwertes (A) bewegt wird und dort ihre Bewegungsrichtung wieder umkehrt.

2. Verfahren nach Anspruch 1, dadurch gekennzeichnet, dass die Sondenbewegung in ein elektrisches Signal umgewandelt wird und der dem Umkehrpunkt proportionale Signalwert für eine befristete Zeit gespeichert wird.

3. Verfahren nach Anspruch 1 oder 2, dadurch gekennzeichnet, dass eine Sonde aus einem Material guter elektrischer Leitfähigkeit und gegebenenfalls guter Wärmebeständigkeit verwendet wird.

## Claims

1. A method of measuring and controlling the level of substances contained in a container by a non-contacting detection of a change of the level (C) by means of distance-measuring means, which are provided with a probe and serve to measure the electrical impedance, and by means of monitoring and controlling means for receiving a distance signal, which is generated by the distance-measuring means in response to a change of the level and are utilized to adjust the level of the substance contained in the container to a desired value, characterized in that the change of the level of piles of non-metallic bulk materials or of liquids – with the exception of molten metal – is detected in that a movable probe is used for a periodic measurement of the change of the electrical impedance between the surface (C) of the substance and the probe, the probe is moved in a measuring cycle substantially vertically to and toward the surface (C) of the substance and when the impedance has reached a value (B) which is very small but differs from zero, the probe is reserved and is moved to a location where the impedance has reached a very high value (A) and the probe is again reversed at that location.

2. A process according to claim 1, characterized in that an electric signal is derived from the movement of the probe and the signal value corresponding to the point of reversal is stored for a limited time.

3. A process according to claim 1 or 2, characterized in that a probe is used which consists of a material that has a high electric conductivity and optionally has a high thermal stability.

## Revendications

1. Procédé de mesure et de réglage du niveau de remplissage d'un récipient par des matières, par détection sans contact de la variation du niveau de remplissage (C), au moyen d'un dispositif électrique de mesure de proximité muni d'une sonde et destiné à mesurer l'impédance électrique, ainsi que de dispositifs de surveillance et de commande destinés à recevoir un signal de proximité produit par le dispositif de mesure de proximité à la suite d'une variation du niveau de remplissage et utilisé pour mettre le niveau de la matière se trouvant dans le récipient au niveau souhaité, caractérisé en ce qu'il consiste à détecter la variation de niveau de tas en vrac de matière non métallique ou de liquides à l'exclusion de métaux fondus au moyen d'une sonde mobile, en mesurant périodiquement la variation de l'impédance électrique entre la surface supérieure (C) de la matière et la sonde, la sonde étant déplacée dans un cycle de mesure sensiblement verticalement par rapport à la surface supérieure (C) de la matière et en direction de celle-ci, le sens du déplacement de la sonde étant inversé lorsqu'une valeur (B) sélectionnée, très petite, mais non nulle, de l'impédance est atteinte jusq'à ce que soit atteinte une valeur (A) de l'impédance très grande, le sens de déplacement de la sonde étant alors inversé à nouveau.

2. Procédé suivant la revendication 1, caractérisé en ce qu'il consiste à transformer le déplacement de la sonde en un signal électrique, et à mémoriser la valeur du signal proportionnelle au point de rebroussement pendant une durée donnée.

3. Procédé suivant la revendication 1 ou 2, caractérisé en ce qu'il consiste à utiliser une sonde en un matériau ayant une bonne conductibilité électrique et, le cas échéant, une bonne stabilité à la chaleur.

F i g.1

H = Höhe über Füllgut

H

Geräte-Isolationswiderstand

Medium

Grenzschicht

Füllgut

A

B

C

Impedanz = I

F i g.2

0 130 635